# EUROPÄISCHE PATENTANMELDUNG

(11) **EP 2 777 987 A1**
(43) Veröffentlichungstag der Anmeldung: **17.09.2014**
(21) Anmeldenummer: 13159208.1
(22) Anmeldetag: 14.03.2013
(51) Int. Cl.: B60Q 1/44

(54) **Verzögerte Lichtabschaltung einer Kfz-Bremsleuchte**

(71) Anmelder: Flextronics Automotive GmbH & Co. KG, 72636 Frickenhausen (DE)
(72) Erfinder: Dr. Wimbert, Frank, 73277 Owen (DE)
(74) Vertreter: Kohler Schmid Möbus

(57) **Zusammenfassung**

Bei einem Verfahren zum Ausschalten mindestens einer Kfz-Bremsleuchte (2, 3, 4), welche mehrere entlang einer Richtung, angeordnete LEDs (2₁₁-2₃₃, 3₁₁-3₃₃, 4₁-4₁₅) aufweist, werden erfindungsgemäß zumindest einige der entlang der Richtung angeordneten LEDs (2₁₁-2₃₃, 3₁₁-3₃₃, 4₁-4₁₅) relativ zueinander zeitverzögert in ihrer Helligkeit reduziert, insbesondere ausgeschaltet. Die zugehörige Kfz-Bremsleuchtenanordnung (1) umfasst eine Steuereinheit (10), welche die LEDs (2₁₁-2₃₃, 3₁₁-3₃₃, 4₁-4₁₅) ansteuert und erfindungsgemäß programmiert ist, beim Ausschalten der mindestens einen Bremsleuchte (2, 3, 4) zumindest einige der entlang einer Richtung angeordneten LEDs (2₁₁-2₃₃, 3₁₁-3₃₃, 4₁-4₁₅) relativ zueinander zeitverzögert in ihrer Helligkeit zu reduzieren, insbesondere auszuschalten.

## Beschreibung

Die vorliegende Erfindung betrifft ein Verfahren zum Ausschalten mindestens einer Kfz-Bremsteuchte, welche mehrere LEDs aufweist.

Es sind Kfz-Bremsleuchtenanordnungen mit zwei Seitenbremsleuchten und mit einer mittleren, meist hochgesetzten Bremsleuchten bekannt, wobei die Seitenbremsleuchten meist durch eine Matrix aus LEDs und die mittlere Bremsleuchte durch eine horizontale Reihe von LEDs gebildet ist. Die LEDs der Bremsleuchten werden von einer Steuereinheit angesteuert, die alle LEDs gleichzeitig abgeschaltet.

Demgegenüber ist es die Aufgabe der vorliegenden Erfindung, bei solchen bekannten Bremsleuchten interessante Designeffekte zu ermöglichen.

Diese Aufgabe wird erfindungsgemäß dadurch gelöst, dass zumindest einige der LEDs relativ zueinander zeitverzögert in ihrer Helligkeit reduziert, insbesondere ausgeschaltet werden

Die Erfindung ermöglicht eine spezielle, leicht verzögerte Lichtabschaltung einer Kfz-Bremsleuchte. Ein kontinuierlich erscheinendes Abschalten kann über eine langsame Ausblendung der LEDs (d.h. mehrere LEDs nebeneinander haben unterschiedliche Helligkeitsniveaus), beispielsweise von außen nach innen oder von innen nach außen abfallend, erreicht werden. Im Ergebnis kann sich ein laufendes Leuchtband ergeben.

Besonders bevorzugt sind die LEDs der mindestens einen Kfz-Bremsleuchte entlang einer Richtung, insbesondere in einer horizontalen Reihe und/oder in einer vertikalen Reihe, angeordnet, und zumindest einige (vorzugsweise alle) der entlang der Richtung angeordneten LEDs werden relativ zueinander zeitverzögert in ihrer Helligkeit reduziert, insbesondere ausgeschaltet

In einer ersten bevorzugten Ausschaltvariante werden beginnend mit der mindestens einen LED, welche entlang der Richtung an dem einen Ende angeordnet ist, die LEDs jeweils zeitverzögert zueinander in Richtung auf das andere Ende in ihrer Helligkeit reduziert, insbesondere ausgeschaltet. Im Ergebnis werden die LEDs entlang der Richtung also zu einer Seite hin - von rechts nach links, von links nach rechts, von oben nach unten oder von unten nach oben - ausgeschaltet.

In einer zweiten bevorzugten Ausschaltvariante werden beginnend mit den LEDs, welche entlang der Richtung an den beiden Enden angeordnet sind, die LEDs jeweils zeitverzögert zueinander in Richtung auf die Mitte in ihrer Helligkeit reduziert, insbesondere ausgeschaltet. Im Ergebnis werden die LEDs entlang der Richtung also von außen nach innen, insbesondere symmetrisch, abgeschaltet, d.h., das Bremslicht fällt nach innen in sich zusammen.

In einer dritten bevorzugten Ausschaltvariante werden beginnend mit der mindestens einen LED, welche entlang der Richtung im Bereich der Mitte angeordnet ist, die LEDs jeweils zeitverzögert zueinander in Richtung auf die beiden Enden in ihrer Helligkeit reduziert, insbesondere ausgeschaltet. Im Ergebnis werden die LEDs entlang der Richtung also von innen nach außen, insbesondere symmetrisch, abgeschaltet, d.h., das Bremslicht fällt beidseitig nach außen in sich zusammen.

Vorzugsweise werden die LEDs entlang der Richtung linear oder, wenn die LEDs in Doppel- oder Mehrfachreihen angeordnet sind, auch zickzack- oder wellenförmig in ihrer Helligkeit reduziert, insbesondere ausgeschaltet.

In einer weiteren bevorzugten Ausschaltvariante werden, wenn die LEDs der mindestens einen Kfz-Bremsleuchte in einer Matrix angeordnet sind, welche ein Symbol, insbesondere Kreis, Polygon oder Buchstabe, enthält, zuletzt die das Symbol ausbildenden LEDs in ihrer Helligkeit reduziert, insbesondere ausgeschaltet. Im Ergebnis bleibt beim Abschalten des Bremslichts zuletzt nur noch das LED-Symbol kurzzeitig stehen, d.h., das Bremslicht fällt bis auf das Symbol in sich zusammen.

In einer weiteren bevorzugten Ausschaltvariante werden, wenn die LEDs der mindestens einen Kfz-Bremsleuchte in einer Matrix angeordnet sind, welche ein Symbol, insbesondere Kreis, Polygon oder Buchstabe, enthält, die das Symbol ausbildenden LEDs in Symbolumlaufrichtung jeweils zeitverzögert in ihrer Helligkeit reduziert, insbesondere ausgeschaltet.

In einer noch weiteren bevorzugten Ausschaltvariante werden, wenn die LEDs der mindestens einen Kfz-Bremsleuchte in einer Matrix angeordnet sind, welche das gleiche Symbol, insbesondere Kreis, Polygon oder Buchstabe, in unterschiedlichen Größen ineinander geschachtelt enthält, die ineinander geschachtelten Symbole jeweils zeitverzögert nach innen und/oder nach außen in ihrer Helligkeit reduziert, insbesondere ausgeschaltet.

Die Zeitverzögerung kann während des Ausschaltens gleich bleiben oder im Laufe des Ausschaltens zu- oder abnehmen. Im Fall der Verzögerungsabnahme beschleunigt sich der Abschaltvorgang im Laufe des Ausschaltens.

Die Erfindung betrifft auch eine Kfz-Bremsleuchtenanordnung mit mindestens einer Kfz-Bremsleuchte, welche mehrere, insbesondere entlang einer Richtung angeordnete LEDs aufweist, und mit einer Steuereinheit, welche die LEDs ansteuert, wobei erfindungsgemäß die Steuereinheit programmiert ist, beim Ausschalten der mindestens einen Bremsleuchte zumindest einige der LEDs relativ zueinander zeitverzögert in ihrer Helligkeit zu reduzieren, insbesondere auszuschalten.

Vorzugsweise weist die Bremsleuchtenanordnung mindestens eine mittlere Bremsleuchten und/oder eine oder zwei Seitenbremsleuchten auf.

Vorteilhafte Ausgestaltungen der Erfindung sind Gegenstand der Unteransprüche. Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine Kfz-Bremsleuchtenanordnung mit zwei Seitenbremsleuchten und einer hochgesetzten mittleren Bremsleuchte;
- Fign. 2 bis 5: verschiedene Varianten des erfindungsgemäßen Verfahrens zum Ausschalten der in Fig.1 gezeigten Bremsleuchten; und
- Fign. 6 und 7: weitere Varianten des erfindungsgemäßen Verfahrens zum Ausschalten von Bremsleuchten in Form einer LED-Matrix.

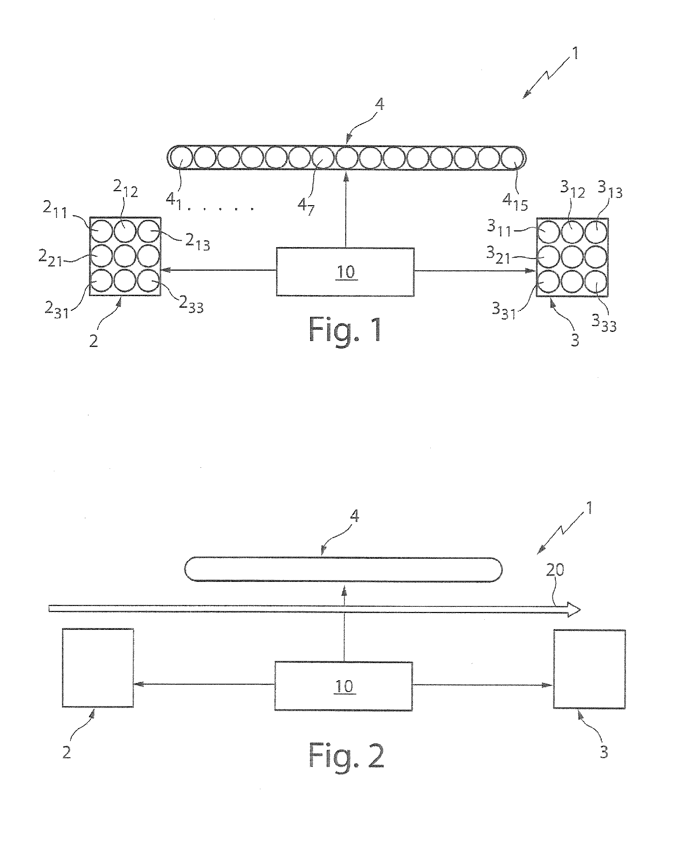

Die in **Fig. 1** gezeigte Kfz-Bremsleuchtenanordnung **1** weist zwei Seitenbremsleuchten **2, 3** und eine dazwischen vorgesehene, hochgesetzte mittlere Bremsleuchte **4** auf. Die Seitenbremsleuchten 2, 3 umfassen jeweils mehrere LEDs **2₁₁-2₃₃, 3₁₁-3₃₃,** die jeweils in einer Matrix - hier lediglich beispielsweise in einer 3x3-Matrix dargestellt - angeordnet sind, und die mittlere Bremsleuchte 4 umfasst mehrere LEDs **4₁**-**4₁₅,** die in einer horizontalen Reihe angeordnet sind. Somit sind die LEDs der drei Matrixspalten der Seitenbremsleuchten 2, 3 und die einzelnen LEDs 4₁-4₁₅ der mittleren Bremsleuchte 4 entlang der horizontalen Richtung ausgerichtet, und die LEDs der drei Matrixreihen der Seitenbremsleuchten 2, 3 und die eine Reihe von LEDs 4₁-4₁₅ der mittleren Bremsleuchte 4 sind entlang der vertikalen Richtung ausgerichtet.

Die Bremsleuchtenanordnung 1 weist weiterhin eine Steuereinheit **10** auf, welche die LEDs 2₁₁-2₃₃, 3₁₁-3₃₃, 4₁-4₁₅ der drei Bremsleuchten 2, 3, 4 angesteuert, also anschaltet und ausschaltet. Die eingeschalteten LEDs 2₁₁-2₃₃, 3₁₁-3₃₃, 4₁-4₁₅ können alle mit gleicher Helligkeit leuchten, aber auch unterschiedliche Helligkeiten innerhalb einer eingeschalteten Bremsleuchte oder zwischen den eingeschalteten Bremsleuchten sind möglich.

Wie im Folgenden mit Bezug auf die Fign. 2 bis 5 im Detail beschrieben wird, ist die Steuereinheit 10 derart programmiert, dass beim Ausschalten der Bremsleuchten 2, 3, 4 die entlang einer Richtung angeordneten LEDs 2₁₁-2₃₃, 3₁₁-3₃₃, 4₁-4₁₅ relativ zueinander zeitverzögert in ihrer Helligkeit reduziert bzw. ausgeschaltet werden.

In der in **Fig. 2** gezeigten Ausschaltvariante werden die entlang der horizontalen Richtung angeordneten LEDs relativ zueinander zeitverzögert von links nach rechts ausgeschaltet. Beginnend mit den LEDs 2₁₁, 2₂₁, 2₃₁ der linken Matrixspalte der linken Seitenbremsleuchte 2 werden dann jeweils zeitverzögert zueinander, also zeitlich nacheinander, die LEDs 2₁₂, 2₂₂, 2₃₂ der mittleren Matrixspalte, die LEDs 2₁₃, 2₂₃, 2₃₃ der rechten Matrixspalte, die einzelnen LEDs 4₁-4₁₅ der mittleren Bremsleuchte 4, die LEDs 3₁₁, 3₂₁, 3₃₁ der linken Matrixspalte der rechten Seitenbremsleuchte 3, die LEDs 3₁₂, 3₂₂, 3₃₂ der mittleren Matrixspalte und schließlich die LEDs 3₁₃, 3₂₃, 3₃₃ der rechten Matrixspalte ausgeschaltet. Insgesamt ergibt sich somit ein aus 21 LED-Spalten bestehendes von links nach rechts laufendes Leuchtband, wie durch den Pfeil **20** angedeutet ist.

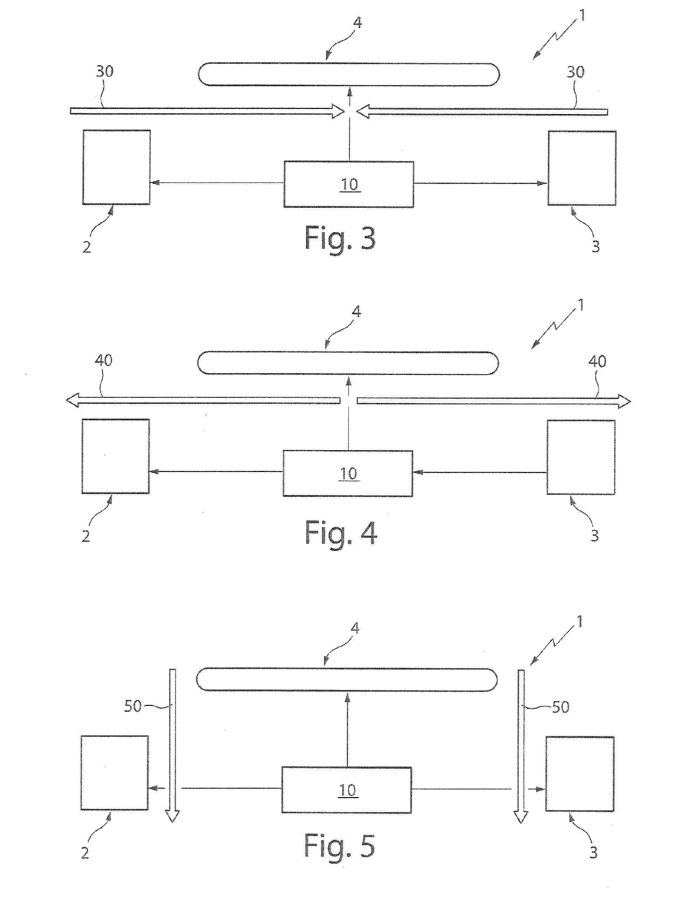

In der in **Fig. 3** gezeigten Ausschaltvariante werden die entlang der horizontalen Richtung angeordneten LEDs relativ zueinander zeitverzögert beidseitig symmetrisch von außen nach innen ausgeschaltet. Beginnend mit den LEDs 2₁₁, 2₂₁, 2₃₁ und 3₁₃, 3₂₃, 3₃₃ der äußeren Matrixspalten der beiden Seitenbremsleuchten 2, 3 werden dann jeweils zeitverzögert zueinander, also zeitlich nacheinander, die LEDs 2₁₂, 2₂₂, 2₃₂ und 3₁₂, 3₂₂, 3₃₂ der mittleren Matrixspalten, die LEDs 2₁₃, 2₂₃, 2₃₃ und 3₁₁, 3₂₁, 3₃₁ der inneren Matrixspalten und schließlich die LEDs der mittleren Bremsleuchte 4 von außen nach innen ausgeschaltet, bis schließlich als letzte die mittlere LED 4₇ ausgeschaltet wird. Insgesamt ergeben sich somit zwei jeweils aus 11 LED-Spalten bestehende, von außen nach innen laufende Leuchtbänder, wie durch die beiden Pfeile **30** angedeutet ist. Das Bremslicht fällt sozusagen von außen nach innen in sich zusammen.

In der in **Fig. 4** gezeigten Ausschaltvariante werden die entlang der horizontalen Richtung angeordneten LEDs relativ zueinander zeitverzögert beidseitig symmetrisch von innen nach außen ausgeschaltet. Beginnend mit der mittleren LED 4₇ der mittleren Bremsleuchte 4 werden dann jeweils zeitverzögert zueinander, also zeitlich nacheinander, die weiteren LEDs der mittleren Bremsleuchte 4 von innen nach außen, die LEDs 2₁₃, 2₂₃, 2₃₃ und 3₁₁, 3₂₁, 3₃₁ der inneren Matrixspalten der beiden Seitenbremsleuchten 2, 3, die LEDs 2₁₂, 2₂₂, 2₃₂ und 3₁₂, 3₂₂, 3₃₂ der mittleren Matrixspalten und schließlich die LEDs 2₁₁, 2₂₁, 2₃₁ und 3₁₃, 3₂₃, 3₃₃ der äußeren Matrixspalten ausgeschaltet. Insgesamt ergeben sich somit zwei jeweils aus 11 LED-Spalten bestehende, von innen nach außen laufende Leuchtbänder, wie durch die beiden Pfeile **40** angedeutet ist. Das Bremslicht fällt sozusagen von innen nach außen in sich zusammen.

In der in **Fig. 5** gezeigten Ausschaltvariante werden die entlang der vertikalen Richtung angeordneten LEDs relativ zueinander zeitverzögert von oben nach unten ausgeschaltet. Beginnend mit den die obere Reihe bildenden LEDs 4₁-4₁₅ der mittleren Bremsleuchte 4 werden dann jeweils zeitverzögert zueinander, also zeitlich nacheinander, die LEDs 2₁₁, 2₁₂, 2₁₂ und 3₁₁, 3₁₂, 3₁₃ der oberen Matrixreihen der beiden Seitenbremsleuchten 2, 3, die LEDs 2₂₁, 2₂₂, 2₂₃ und 3₂₁, 3₂₂, 3₂₃ der mittleren Matrixreihen und schließlich die LEDs 2₃₁, 2₃₂, 2₃₂ und 3₃₁, 3₃₂, 3₃₃ der unteren Matrixreihen ausgeschaltet. Insgesamt ergeben sich somit zwei seitliche, jeweils aus 4 LED-Reihen bestehende, von oben nach unten laufende Leuchtbänder, wie durch die beiden Pfeile **50** angedeutet ist.

In allen gezeigten Ausschaltvarianten kann die zwischen zwei benachbarten LEDs wirksame Zeitverzögerung entweder während des Ausschaltens gleich bleiben oder aber im Laufe des Ausschaltens zu- oder abnehmen. Im Fall der Verzögerungsabnahme beschleunigt sich der Abschaltvorgang im Laufe des Ausschaltens.

Vorzugsweise werden die LEDs entlang der Richtung linear oder, wenn die LEDs in Doppel- oder Mehrfachreihen angeordnet sind, auch zickzack- oder wellenförmig in ihrer Helligkeit reduziert, insbesondere ausgeschaltet. So kann bei der Bremsleuchtenanordnung 1 beispielsweise auch eine Abschaltung der LEDs in der Reihenfolge 3₃₃ ⇒ 3₃₁ ⇒ 3₂₁ ⇒ 3₂₃ ⇒ 3₁₃ ⇒ 3₁₁ => 4₁₄ ⇒ 4₇ und synchron in der Reihenfolge 2₃₁ ⇒ 2₃₃ ⇒ 2₂₃ ⇒ 2₂₁ ⇒ 2₁₁ ⇒ 2₁₃ ⇒ 4₁ => 4₇ erfolgen, also symmetrisch zickzack von außen nach innen.

Statt die LEDs sofort auszuschalten, können die LEDs auch langsam durch Reduzieren ihrer Helligkeit ausgeschaltet werden.

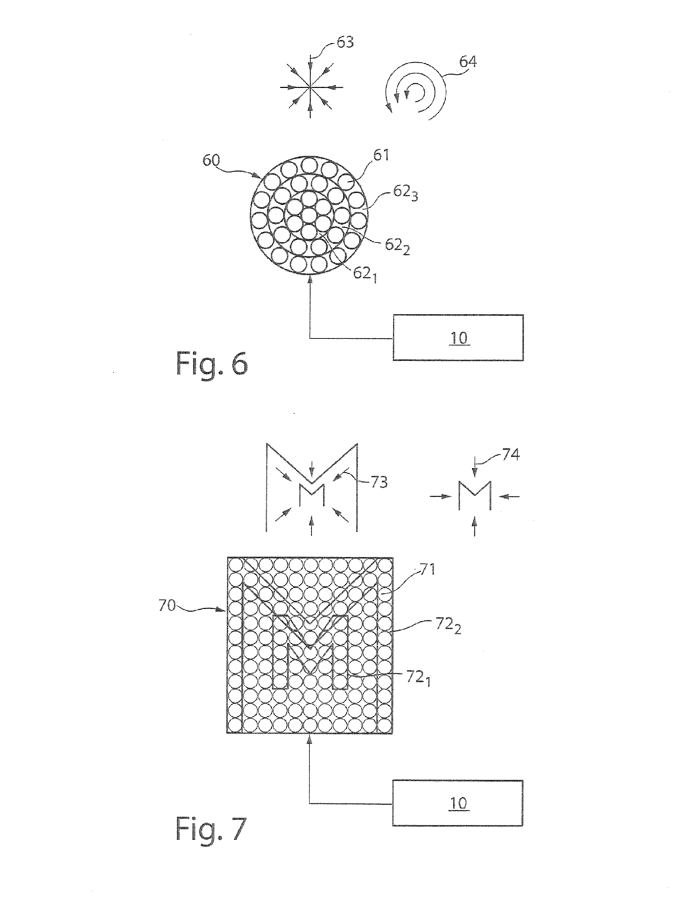

In Fign. 6 und 7 sind weitere Varianten zum Ausschalten von Seitenbremsleuchten gezeigt, deren LEDs in einer Matrix angeordnet sind.
**Fig. 6** zeigt eine runde Seitenbremsleuchte **60** mit einer LED-Kreismatrix, deren LEDs **61** auf mehreren ineinander geschachtelten, zueinander konzentrischen Kreisringen **62₁, 62₂, 62₃** angeordnet sind. Die LED-Kreismatrix enthält somit das gleiche Symbol, hier Kreisring, in unterschiedlichen Größen ineinander geschachtelt. Die LEDs 61 werden von der Steuereinheit 10 beispielsweise derart angesteuert, dass die ineinander geschachtelten Symbole 62₁, 62₂, 62₃ jeweils zeitverzögert von außen nach innen oder von innen nach außen, wie durch die Pfeile **63** angedeutet ist, ausgeschaltet werden. Die LEDs 61 können von der Steuereinheit 10 aber auch derart angesteuert werden, dass zuerst die LEDs des äußeren Kreisrings 62₃ in Ringumlaufrichtung jeweils zeitverzögert ausgeschaltet werden, gefolgt von den LEDs des mittleren und inneren Kreisrings 62₂, 62₁, wie durch die Pfeile **64** angedeutet ist.
**Fig. 7** zeigt eine eckige Seitenbremsleuchte **70** mit einer LED-Quadratmatrix, deren LEDs **71** das gleiche Symbol **72₁, 72₂** hier den Buchstaben "M", in unterschiedlichen Größen ineinander geschachtelt enthalten. Die LEDs 71 werden von der Steuereinheit 10 beispielsweise derart angesteuert, dass die ineinander geschachtelten Symbole 72₁, 72₂ jeweils zeitverzögert von außen nach innen oder von innen nach außen, wie durch die Pfeile **73** angedeutet ist, ausgeschaltet werden. Die LEDs 71 können von der Steuereinheit 10 aber auch derart angesteuert werden, dass bis auf das innere Symbol 72₁ alle anderen LEDs 71 ausgeschaltet werden und zuletzt die das innere Symbol 72₁ ausbildenden LEDs ausgeschaltet werden, wie durch die Pfeile **74** angedeutet ist.

## Patentansprüche

1. Verfahren zum Ausschalten mindestens einer Kfz-Bremsleuchte (2, 3, 4; 60; 70), welche mehrere LEDs (2₁₁-2₃₃, 3₁₁-3₃₃, 4₁-4₁₅; 61; 71) aufweist,
**dadurch gekennzeichnet,**
**dass** zumindest einige der LEDs (2₁₁-2₃₃, 3₁₁-3₃₃, 4₁-4₁₅; 61; 71) relativ zueinander zeitverzögert in ihrer Helligkeit reduziert, insbesondere ausgeschaltet werden.

2. Ausschaltverfahren nach Anspruch 1, **dadurch gekennzeichnet, dass** die LEDs (2₁₁-2₃₃, 3₁₁-3₃₃, 4₁-4₁₅) der mindestens einen Kfz-Bremsleuchte (2, 3, 4) entlang einer Richtung, insbesondere in einer horizontalen Reihe und/oder in einer vertikalen Reihe, angeordnet sind und dass zumindest einige der entlang der Richtung angeordneten LEDs (2₁₁-2₃₃, 3₁₁-3₃₃, 4₁-4₁₅) relativ zueinander zeitverzögert in ihrer Helligkeit reduziert, insbesondere ausgeschaltet werden.

3. Ausschaltverfahren nach Anspruch 2, **dadurch gekennzeichnet, dass** beginnend mit der mindestens einen LED, welche entlang der Richtung an dem einen Ende angeordnet ist, die LEDs (2₁₁-2₃₃, 3₁₁-3₃₃, 4₁-4₁₅) jeweils zeitverzögert zueinander in Richtung auf das andere Ende in ihrer Helligkeit reduziert, insbesondere ausgeschaltet werden.

4. Ausschaltverfahren nach Anspruch 2, **dadurch gekennzeichnet, dass** beginnend mit den LEDs, welche entlang der Richtung an den beiden Enden angeordnet sind, die LEDs (2₁₁-2₃₃, 3₁₁-3₃₃, 4₁-4₁₅) jeweils zeitverzögert zueinander in Richtung auf die Mitte in ihrer Helligkeit reduziert, insbesondere ausgeschaltet werden.

5. Ausschaltverfahren nach Anspruch 2, **dadurch gekennzeichnet, dass** beginnend mit der mindestens einen LED, welche entlang der Richtung im Bereich der Mitte angeordnet ist, die LEDs (2₁₁-2₃₃, 3₁₁-3₃₃, 4₁-4₁₅) jeweils zeitverzögert zueinander in Richtung auf die beiden Enden in ihrer Helligkeit reduziert, insbesondere ausgeschaltet werden.

6. Ausschaltverfahren nach einem der vorhergehenden Ansprüche, **dadurch gekennzeichnet, dass** die LEDs (2₁₁-2₃₃, 3₁₁-3₃₃, 4₁-4₁₅) entlang der Richtung linear oder zickzack- oder wellenförmig in ihrer Helligkeit reduziert, insbesondere ausgeschaltet werden.

7. Ausschaltverfahren nach einem der vorhergehenden Ansprüche, **dadurch gekennzeichnet, dass** die LEDs (61; 71) der mindestens einen Kfz-Bremsleuchte (60; 70) in einer Matrix angeordnet sind, welche ein Symbol (62₁, 62₂, 62₃; 72₁, 72₂), insbesondere Ring, Polygon oder Buchstabe, enthält und dass zuletzt die das Symbol (62₁, 62₂, 62₃; 72₁, 72₂) ausbildenden LEDs (61; 71) in ihrer Helligkeit reduziert, insbesondere ausgeschaltet werden.

8. Ausschaltverfahren nach einem der vorhergehenden Ansprüche, **dadurch gekennzeichnet, dass** die LEDs (61; 71) der mindestens einen Kfz-Bremsleuchte (60; 70) in einer Matrix angeordnet sind, welche ein Symbol (62₁, 62₂, 62₃; 72₁, 72₂), insbesondere Ring, Polygon oder Buchstabe, enthält und dass die das Symbol (62₁, 62₂, 62₃; 72₁, 72₂) ausbildenden LEDs in Symbolumlaufrichtung jeweils zeitverzögert in ihrer Helligkeit reduziert, insbesondere ausgeschaltet werden.

9. Ausschaltverfahren nach einem der vorhergehenden Ansprüche, **dadurch gekennzeichnet, dass** die LEDs (61; 71) der mindestens einen Kfz-Bremsleuchte (60; 70) in einer Matrix angeordnet sind, welche das gleiche Symbol (62₁, 62₂, 62₃; 72₁, 72₂), insbesondere Ring, Polygon oder Buchstabe, in unterschiedlichen Größen ineinander geschachtelt enthält und dass die ineinander geschachtelten Symbole (62₁, 62₂, 62₃; 72₁, 72₂) jeweils zeitverzögert nach innen und/oder nach außen in Helligkeit reduziert, insbesondere ausgeschaltet werden.

10. Ausschaltverfahren nach einem der vorhergehenden Ansprüche, **dadurch gekennzeichnet, dass** die Zeitverzögerung während des Ausschaltens gleich bleibt oder im Laufe des Ausschaltens zu- oder abnimmt.

11. Ausschaltverfahren nach einem der vorhergehenden Ansprüche, **dadurch gekennzeichnet, dass** alle LEDs (2₁₁-2₃₃, 3₁₁-3₃₃, 4₁-4₁₅; 61; 71) der mindestens einen Kfz-Bremsleuchte (2, 3, 4; 60; 70) jeweils mit gleicher Helligkeit leuchten.

12. Ausschaltverfahren nach einem der vorhergehenden Ansprüche, **dadurch gekennzeichnet, dass** die horizontale Richtung durch die LEDs (4₁-4₁₅) einer mittleren Kfz-Bremsleuchten (4) und/oder durch die LEDs (2₁₁-2₃₃, 3₁₁-3₃₃) einer oder zweier Kfz-Seitenbremsleuchten (2, 3; 60; 70) gebildet ist.

13. Ausschaltverfahren nach einem der vorhergehenden Ansprüche, **dadurch gekennzeichnet, dass** die vertikale Richtung durch die LEDs (2₁₁-2₃₃, 3₁₁-3₃₃) einer Kfz-Seitenbremsleuchte (2, 3; 60; 70) und insbesondere zusätzlich durch die LEDs (4₁-4₁₅) einer mittleren Kfz-Bremsleuchten (4) gebildet ist.

14. Kfz-Bremsleuchtenanordnung (1) mit mindestens einer Bremsleuchte (2, 3, 4; 60; 70), welche mehrere, insbesondere entlang einer Richtung angeordnete LEDs (2₁₁-2₃₃, 3₁₁-3₃₃, 4₁-4₁₅; 61; 71) aufweist, und mit einer Steuereinheit (10), welche die LEDs (2₁₁-2₃₃, 3₁₁-3₃₃, 4₁-4₁₅; 61; 71) ansteuert,
**dadurch gekennzeichnet,**
**dass** die Steuereinheit (10) programmiert ist, beim Ausschalten der mindestens einen Bremsleuchte (2, 3, 4; 60; 70) zumindest einige der LEDs (2₁₁-2₃₃, 3₁₁-3₃₃, 4₁-4₁₅; 61; 71) relativ zueinander zeitverzögert in ihrer Helligkeit zu reduzieren, insbesondere auszuschalten.

15. Kfz-Bremsleuchtenanordnung nach Anspruch 14, **dadurch gekennzeichnet, dass** mindestens eine mittlere Bremsleuchten (4) und/oder eine oder zwei Seitenbremsleuchten (2, 3; 60; 70) vorgesehen sind.
